# NEUE EUROPÄISCHE PATENTSCHRIFT

(11) **EP 1 238 993 B2**
(45) Veröffentlichungstag und Bekanntmachung des Hinweises auf die Entscheidung über den Einspruch: **13.05.2009**
(45) Hinweis auf die Patenterteilung: 23.11.2005
(21) Anmeldenummer: 02003222.3
(22) Anmeldetag: 20.02.2002
(51) Int. Cl.: C08G 18/22, C08G 18/34, C08G 18/78, C07C 275/60

(54) **Verfahren zur Herstellung von Polyisocyanaten durch Umsetzung von Carbonsäuren mit Isocyanaten, die nach diesem Verfahren hergestellten Produkte und deren Verwendung in Polyurethankunststoffen**
Process for the preparation of polyisocyanates by reaction of carboxylic acids with isocyanates, products prepared by this process and their use in polyurethanes
Procédé de préparation de polyisocyanates par réaction des acides carboxyliques avec des isocyanates, produits préparés par ce procédé et leur utilisation dans les polyuréthanes

(30) Priorität: 05.03.2001 DE 10110437
(43) Veröffentlichungstag der Anmeldung: 11.09.2002
(73) Patentinhaber: Bayer MaterialScience AG, 51368 Leverkusen (DE)
(72) Erfinder: Gürtler, Christoph, Dr., 50676 Köln (DE); Brahm, Martin, Dr., 51519 Odenthal (DE)

(56) Entgegenhaltungen:
- US-A- 3 383 400
- US-A- 3 517 039
- US-A- 3 970 600
- US-A- 4 001 186
- US-A- 4 021 412
- US-A- 4 087 481
- US-A- 4 395 531
- US-A- 5 260 483
- US-A- 5 580 947
- PATENT ABSTRACTS OF JAPAN vol. 018, no. 511 (C-1253), 27. September 1994 (1994-09-27) & JP 06 172518 A (MITSUI TOATSU CHEM INC), 21. Juni 1994 (1994-06-21)
- OERTEL G.: 'Kunststoff Handbuch', Bd. 7, Seiten 12-14 - 104-903
- WIE Y. ET AL: 'Macromol. Rapid Commun. 17', Bd. 17, Seiten 897 - 903

## Beschreibung

Die Erfindung betrifft ein Verfahren zur Herstellung von Acylharnstoff-Gruppen enthaltenden Polyisocyanaten sowie Gemische hiervon, die so hergestellten Produkte sowie deren Verwendung als Ausgangskomponente bei der Herstellung von Polyurethan-Kunststoffen, insbesondere als Vernetzer für Lackbindemittel mit gegenüber Isocyanatgruppen reaktionsfähigen Gruppen.

Die mit dem erfindungsgemäßen Verfahren hergestellten Polyisocyanate aus aliphatischen Isocyanaten können insbesondere Verwendung finden als Härter für die Herstellung von Polyurethan(PUR)-Lacken für lichtechte Anwendungen, so genannten DD-Lacksystemen.

Das erfindungsgemäße Verfahren basiert auf der Reaktion von Carbonsäuren mit Isocyanaten unter Entweichen von CO₂, wobei für eine rasche Reaktion zu farblosen Produkten ein Katalysator anwesend ist. Bei diesem Verfahren entstehen durch die Reaktion der Carbonsäuren mit Isocyanaten zunächst Amide, die dann durch Reaktion mit einer weiteren Isocyanat Gruppe so genannte Acylharnstoffe bilden.

Die Reaktion von Isocyanaten mit Carbonsäuren zählt zu den bislang wenig untersuchten Reaktionstypen. In einigen Veröffentlichungen (z.B. P. Babusiaux, R. Longeray, J. Dreux, *Liebigs Ann. Chem.* **1976**, *(3)*, 487, A. H. M. Schotmann, W. J. Mijs, *Recl. Trav. Chim. Pays Bas* **1992**, *111*, 88, DE-A 2 436 740 und die in dieser Arbeit zitierte Literatur) ist die Bildung von Acylharnstoff Gruppen aufweisenden Isocyanat Polyadditionsprodukten beschrieben. Die Kondensationsreaktion von Isocyanaten mit Carbonsäuren wurde ebenfalls von I. S. Blagbrough, N. E. Mackenzie, C. Ortiz A. und I. Scott (Tetrahedron Lett. 1986, 27(11), 1251) untersucht.

Die Herstellung von Acylharnstoffen durch die Reaktion von Amiden mit Isocyanten ist vereinzelt beschrieben worden, z.B. J. T. Micich (J. Am. Oil Chem. Soc. 1982, 59(2), 92-4) schildert die Synthese von Acylharnstoffen, die durch die Reaktion von Carbonsäureamiden mit Isocyanaten gewonnen werden.

Die Deutsche Auslegeschrift DE-A 1 230 778 beschreibt ein Verfahren zur Herstellung von acylierten Harnstoff Polyisocyanaten. Hierbei wird von Monocarbonsäuren ausgegangen, die in großer Verdünnung zu einem sehr großen Überschuss der jeweiligen Diisocyanat Komponente hinzugegeben werden. Nachteilig bei diesem Verfahren sind die hohen Reaktionstemperaturen (ca. 130-140°C) und die lange Zugabezeit der Monocarbonsäure zum Isocyanat, die ca. 5 Stunden beträgt. Zur Herstellung von Polyisocyanaten, die für Anwendungen im lacktechnischen Bereich geeignet sein sollen, sind die aufgeführten Verfahren ungeeignet, da eine Gelbfärbung der Produkte, die auf die hohen Reaktionstemperaturen zurückzuführen ist, stets auftritt.

In der EP-A 0 624 170 wird ein Verfahren zur Herstellung von Kunststoffen mit Amid-Gruppen beschrieben. Dabei werden aliphatische und aromatische Polyisocyanate mit mehrfunktionellen Carbonsäuren (mindestens Dicarbonsäuren) und Polyalkoholen zu Kunststoffen umgesetzt. Als Katalysatoren finden tertiäre Amine wie aminosubstitutierte Pyridine und/oder N-substituierte Imidazole Anwendung. Über die Selektivitäten dieser Reaktion bzw. Nebenreaktionen wird keine Aussage gemacht. Bei den erhaltenen Produkten handelt es sich um gelb gefärbte Schaumstoffe. Es ist davon auszugehen, dass bei diesem Verfahren der Katalysator einen Einfluss auf die (gelbe) Farbe des entstandenen Produktes hat. Besonders basische tertiäre Amine, Amidine und Imidazole, sind leicht oxidierbar und können bei längeren Reaktionszeiten zu einer Gelbfärbung des Reaktionsansatzes führen.

Die bisherigen Untersuchungen haben gezeigt, dass nur die Reaktion von Carbonsäuren mit Isocyanaten mit dem Ziel, Schaumstoffe zu erzeugen, zu farblosen Produkten führt. Ansonsten wurden keine Bedingungen gefunden, die farblose oder kaum gefärbte lichtechte Polyisocyanate durch Führung der Reaktion bei niedrigen Temperaturen und technisch realisierbaren Reaktionszeiten liefern.

Somit konnte der Fachmann keiner der oben genannten Veröffentlichungen irgendeinen konkreten Hinweis darauf entnehmen, wie ein Katalysator für die Bildung unter CO₂-Abscheidung hergestellter Umsetzungsprodukte von Isocyanaten mit Carbonsäure Gruppen beschaffen sein sollte, um zu farblosen Produkten zu gelangen.

Es ist also die Aufgabe der Erfindung, ein Verfahren zu finden, das durch Umsetzung der Reaktion von Isocyanaten mit Carbonsäuren zu farblosen, nicht verschäumten Produkten wie Polyisocyanaten führt.

Überraschenderweise wurde nun gefunden, dass durch die Verwendung eines geeigneten Katalysators und der geeigneten Reaktionsbedingungen die Reaktionstemperaturen und/oder die Reaktionsdauer für die Reaktion von Carbonsäuren mit Isocyanaten deutlich gesenkt werden können.

Gegenstand der Erfindung ist somit ein Verfahren zur Herstellung von Acylharnstoffgruppen-tragenden Polyisocyanaten mit einer Farbzahl < 120 Apha, dadurch gekennzeichnet, dass HDI oder TIN mit Essigsäure, Hexansäure, Adipinsäure, Azelainsäure und/oder Dodecandisäure in Gegenwart eines Metallsalzkatalysators im Temperaturbereich von 20 bis 220°C umgesetzt werden.

Durch verminderte Nebenreaktionen im erfindungsgemäßen Verfahren werden lichtechte Produkte mit einer Farbzahl von < 120 [Apha] erhalten. Die Umsetzung wird in Richtung von Polyisocyanaten hin gelenkt. Somit wird es möglich, die Bildung von Nebenprodukten wie z.B. eines Carbonsäure Anhydrids aus der Carbonsäure bzw. damit korrespondierend eines parallel entstehenden Harnstoffs (durch Einwirken des bei der Anhydrid Bildung entstehenden Reaktionswassers auf Isocyanatgruppen) zugunsten der gewünschten Produkte zurückzudrängen. Allerdings kann das nach dem erfindungsgemäßen Verfahren erhaltene Polyisocyanat einen geringen Prozentsatz an Carbonsäure-(Poly)-anhydrid aufweisen, das im Laufe der Reaktion entsteht. Ebenso kann es durch die thermische Belastung des Isocyanates in untergeordnetem Maße zur Bildung von Uretdionen und Biureten kommen.

Als Nebenprodukte der erfindungsgemäßen Umsetzung von Carbonsäuren mit Isocyanaten in Gegenwart der erfindungsgemäß eingesetzten Katalysatoren kann es auch zur Bildung von Carbonsäure Anhydriden kommen. In untergeordnetem Maß wird auch die Bildung von Isocyanuraten beobachtet.

Mit dem erfindungsgemäßen Verfahren wird ein neuer Zugang zu hochfunktionalen Polyisocyanaten aus einfachen Bausteinen wie monomeren Isocyanaten und monomeren Carbonsäuren geschaffen.

Bei dem erfindungsgemäßen Verfahren wird HDI oder TIN mit Essigsäure, Hexansäure, Adipinsäure, Azelainsäure und/oder Dodecandisäure umgesetzt. Dabei liegt üblicherweise die Isocyanat Komponente im Überschuss vor. Zur Verbesserung der Löslichkeit der Carbonsäure kann zusätzlich ein Lösungsmittel zugegeben werden.

Im erfindungsgemäßen Verfahren wird ein Katalysator zugegeben, der die Reaktion des Isocyanats mit der Carbonsäure unter Kohlendioxidentwicklung beschleunigt.

Man lässt üblicherweise so lange miteinander reagieren, bis die Carbonsäure verbraucht ist und das entstandene Amid mit weiterem Isocyanat u.a. zum gewünschten Acylharnstoff abreagiert ist. Nach Ende der Reaktion wird die Reaktionsmischung von monomerem Isocyanat durch Dünnschichtdestillation befreit. Die entstandenen Polyisocyanate bzw. Polyisocyanat Gemische, die neben dem Polyisocyanat noch Anhydride, Biurete, Isocyanurate und Harnstoffe aufweisen können, haben je nach den gewählten Reaktionsbedingungen und Ausgangsstoffen günstige Eigenschaften als Härter für lichtechte Polyisocyanate.

Für das erfindungsgemäße Verfahren eignen sich .

Die geeigneten Carbonsäuren können einzeln oder als Mischung für das erfindungsgemäße Verfahren eingesetzt werden. In einer bevorzugten Ausführungsform wird eine binäre oder auch ternäre Mischung der genannte Dicarbonsäuren eingesetzt im Verhältnis von 0,1:1 bis 1:0,1 für binäre Mischungen und 0,1:0,1:1 bis 0,1:0,1 für ternäre Mischungen. Besonders bevorzugt werden Azelainsäure und Adipinsäure in einem Verhältnis von 1:3 eingesetzt.

Bei dem erfindungsgemäßen Verfahren wird die Carbonsäure bzw. die Carbonsäuremischung zu einem Isocyanat hinzugegeben. Hierbei kann es sich um Hexandiisocyanat (HDI), 3-Isocyanatomethyl-1,8-diisocyanatooktan (Triisocyanatononan, TIN).

Die Zudosierung der Carbonsäure bzw. des Gemisches von Carbonsäuren kann in fester Form erfolgen oder nach Lösen derselben in einem geeigneten Lösungsmittel. Für die Lösung der Carbonsäure bzw. des Gemisches von Carbonsäuren kommen prinzipiell alle Lösungsmittel in Frage, die die Carbonsäuren bzw. das Carbonsäuregemisch lösen. Geeignete Lösungsmittel hierfür sind z.B. Tetrahydrofuran und Ethylenglycoldimethylether oder auch andere Ester sowie Triethylphosphat, wobei diese Lösungsmittel nur beispielhaft zu verstehen sind. Die Menge des eingesetzten Lösungsmittels orientiert sich an der Löslichkeit der Carbonsäure bzw. des Carbonsäuregemisches in diesem Lösungsmittel. In einer bevorzugten Ausführungsform des erfindungsgemäßen Verfahrens wird die Carbonsäure bzw. das Carbonsäuregemisch 10 bis 80 gew.-%ig in dem Lösungsmittel gelöst, besonders bevorzugt ist eine 20 bis 40 gew.-%ige Lösung.

Die Reaktion kann mit oder ohne zusätzliches Reaktionsmedium durchgeführt werden. Geeignete Reaktionsmedien sind z.B. hochsiedende aromatische Lösungsmittel wie Chlorbenzol oder Dichlorbenzol oder hochsiedende Ether, wobei diese nur beispielhaft zu verstehen sind. In einer bevorzugte Ausführungsform des erfindungsgemäßen Verfahrens wird die Reaktion in Gegenwart eines chemisch indifferenten Lösungsmittels durchgeführt. Ein solches geeignetes Lösungsmittel ist z.B. Triethylphosphat oder andere Phosphorsäureester. Die Menge des eingesetzten Co-Lösungsmittels ist beliebig. Sie kann von 1 Gew-%. bis zu mehreren hundert Gew.-% der eingesetzten Carbonsäuren betragen und wird nach der gewünschten Reaktionsgeschwindigkeit oder hinsichtlich der gewünschten Zusammensetzung des entstehenden Polyisocyanats ausgewählt.

Die Menge der entstehenden Nebenprodukte des erfindungsgemäßen Verfahrens hängt u.a. von der Menge und der Natur des eingesetzten Lösungsmittels zur Lösung der Carbonsäure bzw. des Carbonsäuregemisches ab.

Die Zugabe der Carbonsäure bzw. des Carbonsäuregemische zur Reaktionslösung kann bei Raumtemperatur oder auch bei höherer Temperatur bis zu 150°C erfolgen. Bevorzugt ist ein Temperatur Intervall von 0°C bis 100°C, besonders bevorzugt wird in einem Temperaturintervall von 20°C bis 70°C gearbeitet.

Das Lösungsmittel kann nach durchgeführter Reaktion aus dem Reaktionsansatz durch Erhitzen oder zusätzliches Vakuum je nach verwendetem Lösungsmittel entfernt werden.

Durch die Wahl des Katalysators kann die Reaktion von Carbonsäuren mit Isocyanaten sehr deutlich beschleunigt werden.

Geeignete Katalysatoren im Sinne der Erfindung sind (Metall)salze von Elementen der 1., 2. und 3. Hauptgruppe, der 2. und 3. Nebengruppe des Periodensystems nach Mendelejew sowie Salze der Lanthaniden z.B. Butyl-pyridinium-tetrafluoroborat, Aluminiumacetylacetonat, Natriumchlorid, Aluminumtriethylat, Butyl-pyridiniumhexafluorophosphat, Methyl-butyl-imidazolium-tetrafluoroborat, DBTL (Dibutylzinndilaureat), Methyl-butyl-imidazolium-butylsulfonat, Aluminumtriethylat, Bismut-(III)-2-ethylhexanoat, Lithiumhexafluorophosphat, Cäsiummethylsulfonat, Kaliumtriflat, Methyl-butyl-imidazolium-hexafluorophosphat, Bismut-(III)-acetat, Natriummethylsufonat, Zink 2-ethylhexanoat, Bismut-(III)-neodecanoat, Pyridiniumtriflat, Lithiumtetrafluoroborat, Natriumtriflat, Bismut-(III)-acetat, Lithiumchlorid, Lithiumperchlorat, Zinktriflat, Lithiumtriflat, Calciumphosphat, Calciumchlorid, Scandium-(III)-trifluormethansulfonat, Calciumchlorid, Scandium-(III)-acetat hydrat, Magnesiumacetylacetonat, Calcium bis-(2,2,6,6-tetramehyl-3,5-heptanedionat), Calciumperchlorat, Calciumstearat, Lanthan-(III)-acetat hydrat, Magnesium n-propoxid, Magnesiumchlorid, Magnesium 2,4-pentan-dionat, Magnesiumtrifluormethylsulfonat, Magnesiumperchlorat, Ytterbium-(III)-trifluormethylsulfonat, Magnesiumstearat, wobei diese nur beispielhaft zu verstehen sind.

Die als Katalysator bekannten Aminbasen zur Beschleunigung der Reaktion von Carbonsäuren mit Isocyanaten zeigen den Nachteil, dass bei längeren Reaktionszeiten und höheren Temperaturen eine leichte Vergilbung des Produktes eintreten kann. Vorgenannte Reaktionsbeschleuniger sind z.B. Triethylamin, DBU (Diazabicycloundecen) sowie DBN (Diazabicyclononen).

Bei der Durchführung des erfindungsgemäßen Verfahrens wird nach Zugabe der Carbonsäure bzw. des Carbonsäuregemischs des Isocyanats oder umgekehrt und in Gegenwart des Katalysators gerührt, bis die Gasentwicklung aufgehört hat. Danach wird auf eine höhere Temperatur erhitzt. Die Wahl der Reaktionstemperatur ist allgemein unkritisch, wobei bei zu hohen Temperaturen eine Gelbfärbung des Polyisocyanats beobachtet wird. Geeignet sind Temperaturen von 20°C bis 220°C. In einer bevorzugten Ausführungsform wird eine Temperatur von 80°C bis 150°C eingestellt, in einer besonders bevorzugten Ausführungsform von 100°C bis 140°C. Im Gegensatz zu bekannten Reaktionen, die nicht in Gegenwart eines Katalysators durchgeführt werden, kommt es im katalysierten Fall auch bei höheren Temperaturen zu einer deutlich geringeren Verfärbung des Reaktionsansatzes.

Die Reaktionsdauer wird im allgemeinen durch den gewünschten Grad der Funktionalität der Reaktionsprodukte, d.h. überwiegend der Bildung von Polyisocyanaten auf der Basis von Acylharnstoffen, bestimmt. Typischerweise führen längere Reaktionszeiten zu einem höheren Maß an Funktionalität. Die Bestimmung des NCO-Werts der Reaktionsmischung bietet einen Hinweis auf die Funktionalität der Mischung, wobei jedoch andere Faktoren wie die Bildung von Carbonsäure Anhydriden einen nicht zutreffenden (d.h. zu hohen) NCO-Wert vortäuschen können. Nach Erreichen des gewünschten NCO-Wertes wird die Reaktion durch Abkühlen auf Raumtemperatur abgebrochen.

Nach Ende der Reaktion wird die Reaktionsmischung über einen Dünnschichtverdampfer von monomerem Isocyanat befreit. Dabei wird die Dünnschichtung bevorzugt in einem Temperaturbereich von 100 bis 180°C bei geeignetem Vakuum durchgeführt, besonders bevorzugt in einem Temperaturbereich von 120 bis 160°C.

Ein weiterer Gegenstand der Erfindung sind die nach dem erfindungsgemäßen Verfahren hergesstellten Umsetzungsprodukte (Polyisocyanate).

Ein weiterer Gegenstand ist auch die Verwendung dieser Produkte zur Herstellung von Bindemitteln für Polyurethanlacke.

### Beispiele

### Beispiel 1

Es werden 1411,2 g Hexamethylendiisocyanat, 54 mg Magnesiumtrifluorsulfonat sowie jeweils 150 mg Ionol und Tinuvin 770 in einem 2 1 Dreihalskolben vorgelegt. Zu dieser Mischung werden 51,15 g Adipinsäure und 21,96 g Azelainsäure, beide gelöst in 282 g Triethylphospat über einen Zeitraum von 30 min hinzugegeben. Die Temperatur bei der Zugabe beträgt 60°C. Nach beendeter Zugabe wird auf 110°C erhitzt. Man erhitzt über einen Zeitraum von 15 Stunden. Danach lässt man abkühlen. Der NCO-Wert der Lösung beträgt 36,1% (theoret. NCO-Wert für die Umsetzung zum tetrafunktionalen Acylharnstoff: 36,3%). Die Reaktionslösung wird einer Dünnschichtdestillation (Temperatur 130°C, Druck 1,5 x 10⁻² bar) unterworfen. Man erhält 334 g eines Produktes mit einer Farbzahl von 60 [Apha] und einer Viskosität von 3870 mPas (Ausbeute 23% bezogen auf Säure und Isocyanat). Der Anteil des monomeren Hexamethylendiisocyanats beträgt ca. 0,1%.

### Beispiel 2

Es werden 604,8 g Hexamethylendiisocyanat, 11 mg Zinkacetat sowie jeweils 60 mg Ionol und Tinuvin 770 in einem 1 1 Dreihalskolben vorgelegt. Zu dieser Mischung werden 21,92 g Adipinsäure und 9,41 g Azelainsäure hinzugegeben. Die Temperatur wird nach beendeter Zugabe wird auf 120°C eingestellt. Man erhitzt über einen Zeitraum von 12 Stunden. Danach lässt man abkühlen. Der NCO-Wert der Lösung beträgt 43,4% (theoret. NCO-Wert für die Umsetzung zum tetrafunktionalen Acylharnstoff: 43,5%). Die Reaktionslösung wird einer Dünnschichtdestillation unterworfen (Temperatur 130°C, Druck 1,5 x 10⁻² bar). Man erhält 143,4 g eines Produktes mit einer Farbzahl von 65 [Apha] und einer Viskosität von 2250 mPas (Ausbeute 23,2% bezogen auf Säure und Isocyanat). Der Anteil des monomeren Hexamethylendiisocyanats beträgt ca. 0,1%.

## Patentansprüche

1. Verfahren zur Herstellung von Acylhamstoffgruppen-tragenden Polyisocyanaten mit einer Farbzahl < 120 Apha, **dadurch gekennzeichnet, dass** HDI oder TIN mit Essigsäure, Hexansäure, Adipinsäure, Azelainsäure und/oder Dodecandisäure in Gegenwart eines Metallsalzkatalysators im Temperaturbereich von 20 bis 220°C umgesetzt werden.

2. Verfahren nach Anspruch 1, **dadurch gekennzeichnet, dass** als Katalysator Salze der Elemente der 1., 2. und 3. Hauptgruppe sowie der 2. und 3. Nebengruppe des Periodensystems der Elemente sowie Lanthanoiden verwendet werden.

3. Verwendung der gemäß Anspruch 1 oder 2 hergestellten Polyisocyanate als Polyisocyanatkomponente in Polyurethanlack- und Beschichtungsystemen.

4. Polyisocyanat hergestellt nach dem Verfahren der Ansprüche 1 oder 2.

5. Verwendung der Polyisocyanate hergestellt gemäß Ansprüchen 1 oder 2 zur Herstellung von Bindemitteln für Polyurethanlacke.

## Claims

1. Process for preparing polyisocyanates which carry acylurea groups and have a colour number of < 120 Apha, **characterized in that** HDI or TDI are reacted with acetic acid hexanoic acid, adipic acid, azelaic acid and/or dodecanedioic acid in the presence of a metal salt catalyst in the temperature range from 20 to 220°C.

2. Process according to Claim 1, **characterized in that** as catalyst salts of the elements of main groups 1, 2 and 3 and also transition groups 2 and 3 of the Periodic Table of the Elements and also lanthanoids are used.

3. Use of the polyisocyanates prepared according to Claims 1 or 2 as polyisocyanate component in polyurethane paint and coating systems.

4. Polyisocyanates prepared by the process of Claims 1 or 2.

5. Use of the polyisocyanates prepared according to Claims 1 or 2 for preparing binders for polyurethane coating materials.

## Revendications

1. Procédé pour la préparation de polyisocyanates portant des groupes acylurée avec un indice de couleur < 120 Apha, **caractérisé en ce que** l'on fait réagir HDI ou TIN avec de l'acide acétique, de l'acide caproïque, de l'acide adipique, de l'acide azélaïque et/ou du diacide dodécanoïque en présence d'un catalyseur de sel métallique dans un domaine de température de 20 à 220°C.

2. Procédé selon la revendication 1, **caractérisé en ce que** l'on utilise comme catalyseur des sels des éléments du premier, second et troisième groupe principal ainsi que du second et troisième groupe secondaire du système périodique des éléments ainsi que des lanthanoïdes.

3. Utilisation des polyisocyanates préparés selon les revendications 1 ou 2 comme, constituants polyisocyanate dans des systèmes de laques et de revêtements de polyuréthane.

4. Polyisocyanates préparés selon le procédé selon les revendications 1 ou 2.

5. Utilisation des polyisocyanates préparés selon les revendications 1 ou 2 pour la préparation de liants destinés aux laques de polyuréthane.
